# EUROPEAN PATENT APPLICATION

(11) **EP 4 286 300 A1**
(43) Date of publication of application: **06.12.2023**
(21) Application number: 22177154.6
(22) Date of filing: 03.06.2022
(51) Int. Cl.: B65G 15/02, B65G 21/14

(54) **CONVEYOR**

(71) Applicant: Logi Concept Engineering B.V., 7156 NW Beltrum (NL)
(72) Inventor: Brinkers, Joep Hendrik, 7152KV Eibergen (NL)
(74) Representative: 't Jong, Bastiaan Jacob

(57) **Abstract**

The invention relates to a conveyor comprising:
- a base-frame extending in a length direction;
- a sub-frame movable along the base frame in length direction between a first end position and a second end position;
- a first end roller arranged to the base-frame;
- a second end roller arranged to the sub-frame;
- a first return roller arranged to the base-frame;
- a second return roller arranged to the sub-frame;
- drive means arranged to the base-frame;
- an endless conveyor belt running consecutively along the first end roller, the second end roller, the second return roller, the drive means, the first end roller and back to the first end roller;
wherein the endless conveyor belt comprises a transport section positioned between the first end roller and the second end roller, a return section positioned between the first return roller and the drive means, and a compensation section positioned between the second return roller and the drive means;
wherein the transport section, the return section and the compensation section are parallel to each other and are parallel to the length direction; and
wherein the second return roller is, both in the first end position and the second end position, positioned in length direction between the first return roller and the drive means.

## Description

The invention relates to a conveyor. Typically a conveyor has a fixed length and comprises a frame with on opposite ends two end rollers along which an endless conveyor belt is arranged.

When objects are transported from a single supply conveyor and need to be diverted to either one of two discharge conveyors, there needs to be some kind of switch which ensures that the objects are transported to the correct one of the two discharge conveyors. The same applies when objects are supplied from two separate supply conveyor onto a single discharge conveyor.

Depending on the layout of the whole transport chain, one could use a divider belt, such as described by EP 2722295. Such a divider belt could be switched between two parallel conveyors. However the length of the divider belt is substantial compared to the sideways displacement of the divider belt. Furthermore, the two parallel supply conveyors must be arranged in line with the single discharge conveyor or vice versa. This requires a substantial length to house the conveyor chain.

If such space is not available, then a curved conveyor is required to divert the objects on one conveyor to a next conveyor perpendicular to the first conveyor. However, if also the objects need to be combined from two conveyor onto one conveyor or vice versa, then a complicated lift system with two separate curved conveyors of different length are required to selectively connect the two parallel conveyors with the single conveyor extending at an angle, for example perpendicular to said two parallel conveyors.

It is an object of the invention to reduce the above mentioned disadvantages.

This object is achieved with a conveyor according to the invention, which conveyor comprises:
- a base-frame extending in a length direction;
- a sub-frame movable along the base frame in length direction between a first end position and a second end position;
- a first end roller arranged to the base-frame;
- a second end roller arranged to the sub-frame;
- a first return roller arranged to the base-frame;
- a second return roller arranged to the sub-frame;
- drive means arranged to the base-frame;
- an endless conveyor belt running consecutively along the first end roller, the second end roller, the second return roller, the drive means, the first end roller and back to the first end roller;
   wherein the endless conveyor belt comprises a transport section positioned between the first end roller and the second end roller, a return section positioned between the first return roller and the drive means, and a compensation section positioned between the second return roller and the drive means;
   wherein the transport section, the return section and the compensation section are parallel to each other and are parallel to the length direction; and
   wherein the second return roller is, both in the first end position and the second end position, positioned in length direction between the first return roller and the drive means.

With the conveyor according to the invention, the length of the transport section, along which the objects are transported, can be adjusted by moving the sub-frame between the first and second position.

With the adjustable length of the conveyor, a connection to two parallel conveyors being positioned perpendicular to the conveyor according to the invention can easily be made simply by moving the sub-frame from the first end position and the second end position.

A diverter plate or a push system can move the objects from the conveyor according to the invention to one of the two perpendicular conveyors, depending on the position of the sub-frame.

The advantage of the conveyor according to the invention is that a simple design is provided for the conveyor, such that costs can be kept low relative to other solutions. Also the arrangement of the drive means to the base-frame allows for reliable driving of the conveyor belt.

In a further embodiment of the conveyor according to the invention the endless conveyor belt further comprises a first connection section positioned between the first end roller and the first return roller, and a second connection section positioned between the second end roller and the second return roller.

The first connection section and the second connection section allow for the return section and the compensation section to be positioned at a distance below the transporting section. For example the transporting section could be positioned on top of the base-frame and sub-frame, while the return section and compensation section are positioned at the bottom of even below the base-frame and sub-frame.

A preferred embodiment of the conveyor according to the invention further comprises an auxiliary, curved conveyor having an auxiliary conveyor belt arranged around at least a first auxiliary end roller and a second auxiliary end roller, wherein the angle between the axes of the first auxiliary end roller and the second auxiliary end roller is larger than 0° and smaller than 180°,
which auxiliary, curved conveyor is arranged to the sub-frame and wherein the first auxiliary end roller is positioned parallel and adjacent to the second end roller.

Having the auxiliary, curved conveyor arranged on the sub-frame ensures that when adjusting the length of the conveyor by moving the sub-frame between the first end position and the second end position, the curved conveyor is moved along and the connection of the endless conveyor belt to the auxiliary conveyor belt is maintained at all times.

With this embodiment the conveyor provides both for an adjustable length as well as changing direction of the objects between an angle of larger than 0° and smaller than 180°. This facilitates the connection to two parallel conveyors, which are arranged at an angle to the transport section of the conveyor according to the invention.

In another embodiment of the conveyor according to the invention the drive means comprise a driven drive roller and a tension roller along which the endless conveyor belt is guided, which tension roller is movable in a tension direction perpendicular to the axis of the tension roller and wherein urging means, such as a spring or gravity, urge the tension roller in tension direction in order to tension the endless conveyor belt.

The drive means allow for driving the endless conveyor belt. The tension direction ensures that sufficient tension is maintained in the conveyor belt, even if the conveyor belt has increased in length due to wear or due to the load being transported. Having the driving means arranged to the base-frame provides for a simple and reliable construction.

In a further preferred embodiment of the conveyor according to the invention a first support surface is provided extending parallel to and below the transport section for supporting the transport section of the endless conveyor belt.

The first support surface allows for higher loads to be transported on the conveyor belt, without the conveyor belt sagging unacceptably.

In yet another preferred embodiment of the conveyor according to the invention the first support surface is provided by guide rails extending on both sides of the transport section.

Having guide rails extending on both sides of the transport section allows for a simple telescopic construction in the guide rails such that the movement of the sub-frame and change of length of the transporting section can be accommodated.

In still a further embodiment of the conveyor according to the invention a second support surface, such as a number of parallel support rollers, is provided extending parallel to and below the return section for supporting the the return section.

With the second support surface also the return section is supported preventing sagging of the return section.

These and other features of the invention will be elucidated in conjunction with the accompanying drawings.
Figure 1A shows a schematic top view of an embodiment of the conveyor in a first end position.
Figure 1B shows a schematic top view of the embodiment of the conveyor of figure 1A in a second end position.
Figure 2A shows a cross-sectional view of the conveyor in the position as shown in figure 1A.
Figure 2B shows a cross-sectional view of the conveyor in the position as shown in figure 1B.

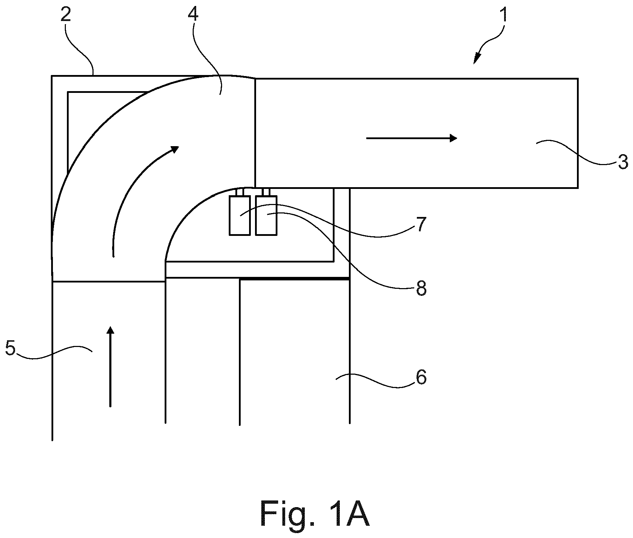

Figure 1A shows an embodiment of a conveyor 1 according to the invention in a first end position. The conveyor 1 has a base-frame 2 on which an endless conveyor belt 3 is arranged as well as an auxiliary curved conveyor 4, which takes objects from a first supply conveyor 5 moves the objects over an angle of about 90° and delivers the objects to the endless conveyor belt 3.

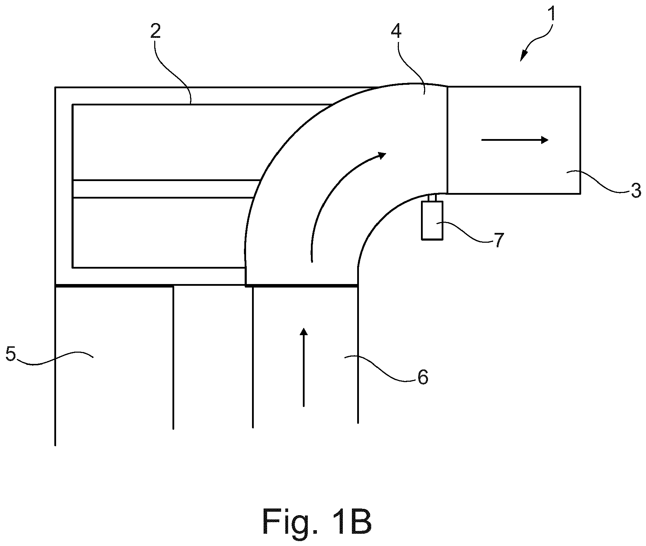

In figure 1B the conveyor 1 has been put in a second end position, in which the endless conveyor belt 3 is reduced in length and the auxiliary curved conveyor 4 connects to a second supply conveyor 6.

The auxiliary curved conveyor 4 is driven by a motor 7, while the endless conveyor belt 3 is driven by a motor 8.

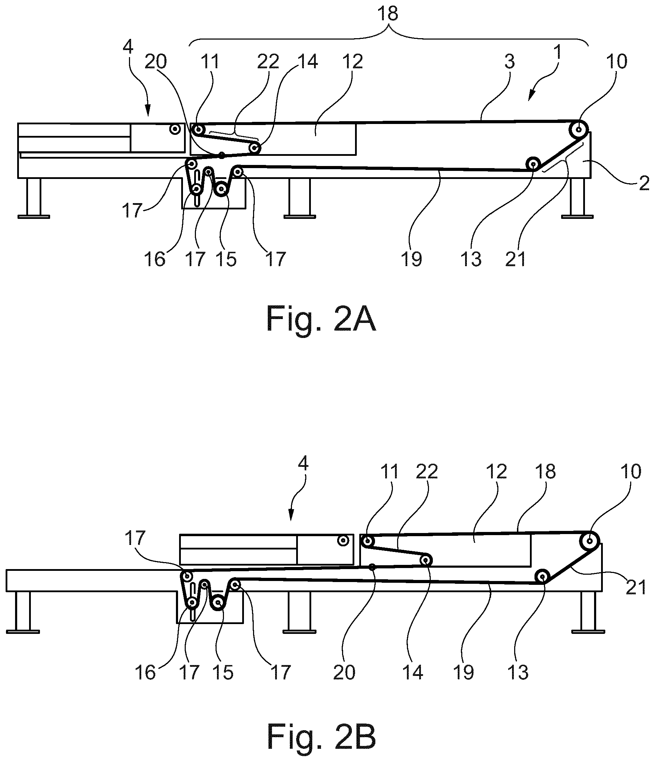

Figure 2A shows a cross-section of the conveyor 1 as shown in figure 1A in the first end position. A first end roller 10 is arranged to the base-frame 2 and a second end roller 11 is arranged to a sub-frame 12, which is movable along the base-frame 2. The auxiliary curved conveyor 4 is also arranged on this sub-frame 12 and moves along with the second end roller 11.

A first return roller 13 is arranged near and below the first end roller 10 at the base-frame 2, while a second return roller 14 is arranged near and below the second end roller 11 at the sub-frame 12.

Drive means are provided by a drive roller 15 driven by the motor 8 and a tension roller 16, which is vertically adjustable in a tension direction. Additional rollers 17 guide the conveyor belt 3 correctly along the drive roller 15 and the tension roller 16.

The section 18 between the first end roller 10 and the second end roller 11 is the transport section. The section 19 between the first return roller 13 and the drive means 15, 16, 17 is the return section, while a compensation section 20 is provided between the second return roller 14 and the drive means 15, 16, 17. Furthermore a first connection section 21 is provided between the first end roller 10 and the first return roller 13, while a second connection section 22 is provided between the second end roller 11 and the second return roller 14.

In figure 2B, the sub-framer 12 is moved to the second end position, such that the transport section 18 is reduced in length. The compensation section 20 has instead increased in length as much as the transport section 18 has reduced in length. The return section 19, the first connection section 21 and the second connection section 22 have maintained their respective lengths, as the respective rollers did not change position relative to each other.

The tension roller 16 could compensate for any small changes in the length of the transport section 18 and the compensation section 20, if necessary. The tension roller 16 also compensates for any changes in length of the endless conveyor belt 3, for example due to wear or load.

## Claims

1. Conveyor comprising:
- a base-frame extending in a length direction;
- a sub-frame movable along the base frame in length direction between a first end position and a second end position;
- a first end roller arranged to the base-frame;
- a second end roller arranged to the sub-frame;
- a first return roller arranged to the base-frame;
- a second return roller arranged to the sub-frame;
- drive means arranged to the base-frame;
- an endless conveyor belt running consecutively along the first end roller, the second end roller, the second return roller, the drive means, the first end roller and back to the first end roller;
wherein the endless conveyor belt comprises a transport section positioned between the first end roller and the second end roller, a return section positioned between the first return roller and the drive means, and a compensation section positioned between the second return roller and the drive means;
wherein the transport section, the return section and the compensation section are parallel to each other and are parallel to the length direction; and
wherein the second return roller is, both in the first end position and the second end position, positioned in length direction between the first return roller and the drive means.

2. Conveyor according to claim 1, wherein the endless conveyor belt further comprises a first connection section positioned between the first end roller and the first return roller, and a second connection section positioned between the second end roller and the second return roller.

3. Conveyor according to claim 1 or 2, further comprising an auxiliary, curved conveyor having an auxiliary conveyor belt arranged around at least a first auxiliary end roller and a second auxiliary end roller, wherein the angle between the axes of the first auxiliary end roller and the second auxiliary end roller is larger than 0° and smaller than 180°,
which auxiliary, curved conveyor is arranged to the sub-frame and wherein the first auxiliary end roller is positioned parallel and adjacent to the second end roller.

4. Conveyor according to any of the preceding claims, wherein the drive means comprise a driven drive roller and a tension roller along which the endless conveyor belt is guided, which tension roller is movable in a tension direction perpendicular to the axis of the tension roller and wherein urging means, such as a spring or gravity, urge the tension roller in tension direction in order to tension the endless conveyor belt.

5. Conveyor according to any of the preceding claims, wherein a first support surface is provided extending parallel to and below the transport section for supporting the transport section of the endless conveyor belt.

6. Conveyor according to claim 5, wherein the first support surface is provided by guide rails extending on both sides of the transport section.

7. Conveyor according to claim 5 or 6, wherein a second support surface, such as a number of parallel support rollers, is provided extending parallel to and below the return section for supporting the the return section.
